# EUROPÄISCHE PATENTANMELDUNG

(11) **EP 3 453 470 A1**
(43) Veröffentlichungstag der Anmeldung: **13.03.2019**
(21) Anmeldenummer: 18180058.2
(22) Anmeldetag: 27.06.2018
(51) Int. Cl.: B21F 23/00, B21D 43/00, B23Q 7/03, B65G 15/42, B65G 15/12

(54) **TRANSPORTVORRICHTUNG FÜR STANGEN ODER DRÄHTE**

(30) Priorität: 12.09.2017 DE 202017105527 U
(71) Anmelder: Ideal-Werk C. & E. Jungeblodt GmbH & Co.KG, 59557 Lippstadt (DE)
(72) Erfinder: JUNGEBLODT Max Clemens, 59555 Lippstadt (DE)
(74) Vertreter: Schäperklaus, Jochen

(57) **Zusammenfassung**

Die Erfindung betrifft eine Transportvorrichtung für Stangen (5) oder Drähte
- mit einer Übernahmeeinrichtung zum Übernehmen der Stangen (5) oder Drähte aus einer ersten Maschine, insbesondere eine Richt- und Abschneidemaschine und
- mit einer Abgabeeinrichtung zum Abgeben der Stangen (5) oder Drähte an eine zweite Maschine, insbesondere eine Gitterschweißmaschine
wobei die Übernahmeeinrichtung wenigstens ein erstes Transportband (1) zum Transportieren vereinzelter Stangen oder Drähte aufweist und die Abgabeeinrichtung wenigstens ein zweites Transportband (2) zum Transportieren vereinzelter Stangen oder Drähte aufweist.

## Beschreibung

Die vorliegende Erfindung betrifft eine Transportvorrichtung für Stangen oder Drähte
- mit einer Übernahmeeinrichtung zum Übernehmen der Stangen oder Drähte aus einer ersten Maschine, insbesondere einer Richt- und Abschneidemaschine und
- mit einer Abgabeeinrichtung zum Abgeben der Stangen oder Drähte an eine zweite Maschine, insbesondere eine Gitterschweißmaschine.

Aus dem Stand der Technik sind Richt- und Abschneidemaschinen bekannt. Mit diesen Maschinen werden lange Stangen oder Drähte gerichtet und in Stangen oder Drähte mit einer gewünschten Länge abgeschnitten. Anschließend werden die Stangen oder Drähte von einer Einrichtung übernommen und abgelegt. Die gerichteten und auf Länge gebrachten Stangen oder Drähte können in einer zweiten Maschine verarbeitet werden.

Es ist auch bekannt aus Stangen oder Drähten Gitter herzustellen. Gitter könnten beispielweise in Gitterschweißmaschinen hergestellt werden. Dazu werden zunächst die Stangen oder Drähte in die Maschine eingelegt, die die so genannten Längsdrähte des herzustellenden Gitters bilden. Dann werden die Stangen oder Drähte in die Maschine eingelegt, die die so genannten Querdrähte bilden.

Für das einwandfreie Funktionieren der Gitterschweißmaschinen ist es von besonderer Bedeutung, dass die Stangen oder Drähte einwandfrei, d.h., in einer vorgegebenen Richtung ausgerichtet in die Maschine eingelegt werden. Dazu müssen die Stangen oder Drähte vereinzelt werden. Das gilt insbesondere für lange dünnen Stangen oder Drähte.

Nach dem Richten und Abschneiden werden die Stangen oder Drähte derzeit häufig in Behältern gesammelt. Anschließend werden sie zu der Gitterschweißmaschine gebracht, wo sie zunächst maschinell mit einer dazu geeigneten Einrichtung oder manuell vereinzelt werden, um in die Gitterschweißmaschine eingelegt zu werden. Sowohl die manuelle als auch die maschinelle Lösung sind sehr aufwändig. Hier setzt die vorliegende Erfindung an.

Der vorliegenden Erfindung liegt das Problem zu Grunde die Zuführung von gerichteten und auf Länge gebrachten Stangen oder Drähten zu einer Gitterschweißmaschine effizient zu gestalten.

Dieses Problem löst die Erfindung dadurch, dass die Übernahmeeinrichtung wenigstens ein erstes Transportband zum Transportieren vereinzelter Stangen oder Drähte aufweist und die Abgabeeinrichtung wenigstens ein zweites Transportband zum Transportieren vereinzelter Stangen oder Drähte aufweist.

Mit Hilfe der Übernahmeeinrichtung werden die von der ersten Maschine, zum Beispiel einer Richt- und Abschneidevorrichtung einzeln abgegebenen Stangen oder Drähte übernommen. Die Stangen oder Drähte werden auf, in oder an dem oder den ersten Transportbändern angeordnet. Das oder die ersten Transportbänder kann mehrere vereinzelte Stangen oder Drähte gleichzeitig transportieren. Dadurch ist es möglich, dass das erste Transportband oder die ersten Transportbänder einen Vorrat an Stangen oder Drähten aufnimmt.

Dieser Vorrat kann dann von der Abgabeeinrichtung übernommen werden, die die Stangen oder Drähte von der Übernahmeeinrichtung übernimmt. Das zweite Transportband oder die zweiten Transportbänder nehmen die weiterhin vereinzelten Stangen oder Drähte auf und geben sie dann vereinzelt an die zweite Maschine, zum Beispiel eine Gitterschweißmaschine ab.

Die erfindungsgemäße Vorrichtung schafft nicht nur die Transportverbindung zwischen der ersten Maschine und der zweiten Maschine. Sie hält die Stangen oder Drähte auch einzeln, so dass die Stangen oder Drähte nachdem sie einzeln die erste Maschine verlassen haben, vereinzelt von der erfindungsgemäßen Vorrichtung transportiert werden und einzeln, insbesondere eine Stange nach der anderen oder ein Draht nach dem anderen an die zweite Maschine abgegben.

Außerdem ermöglicht die erfidungsgemäße Vorrichtung auch eine Bevorratung oder einer Pufferung der vereinzelten Stangen oder Drähte, was insbesondere deshalb von besonderem Interesse bei einer Lieferung von einer Richt- und Abschneidemaschine zu einer Gitterschweißmaschine ist, weil die Richt- und Abschneidemaschine trotz einer diskontinuierlichen Abnahme der Stangen oder Drähte durch die Gitterschweißmaschine kontinuierlich die Stangen oder Drähte richten und auf Länge bringen kann. Die Übernahmeeinrichtung kann so gestaltet und eingerichtet sein, dass sie die Stangen oder Drähte mit einer ersten Frequenz abnimmt, die von der ersten Maschine vorgegeben wird. Dazu wird dann im Takt der ersten Maschine das oder die ersten Transportbänder bewegt, um einen freien Platz des oder der ersten Transportbänder zur Übernahme der Stangen oder Drähte an der Stelle zu positionieren, an der die Stangen oder Drähte von der ersten Maschine abgegeben werden.

Die Abgabeeinrichtung der erfindungsgemäßen Transportvorrichtung kann dagegen diskontinuierlich die Stangen oder Drähte von der Übernahmeeinrichtung übernehmen und diskontinuierlich an die zweite Maschine abgegeben.

Eine diskontinuierliche Verarbeitung von vereinzelten Stangen oder Drähten ist insbesondere bei einer Gitterschweißmaschine erforderlich, die bei der Herstellung eines Gitters zunächst die sogenannten Längsdrähte positioniert, um anschließend darauf einen so genannten Querdraht nach dem anderen zu positionieren und an die Längsdrähte zu schweißen. Die Positionierung der Längs- und Querdrähte kann in den Zeitabschnitten, in denen sie erfolgt, mit einer zweiten bzw. einer dritten Frequenz erfolgen, die höher ist als die erste Frequenz, mit der die Richt- und Abschneidemaschine arbeitet. Insbesondere für die Positionierung der Längsdrähte muss dazu eine Einrichtung der Gitterschweißmaschine bewegt werden, um die Längsdrähte zu positionieren.

Es ist daher von Vorteil, wenn auch die Abgabeeinrichtung der erfindungsgemäßen Transportvorrichtung bewegt werden kann. In einer Position kann sie, beispielsweise während des Schweißens, zur Übernahmeeinrichtung bewegt werden und eine Anzahl von Stangen oder Drähten von der Übernahmeeinrichtung übernehmen. Anschließend kann die Abgabeeinrichtung dann von der Übernahmeeinrichtung gelöst werden, um die nach wie vor vereinzelten Stangen oder Drähte an die Gitterschweißmaschine abzugeben. Die Abgabeeinrichtung kann die Stangen oder Drähte insbesondere einzeln in ein Magazin der Gitterschweißmaschine einlegen. Ein solches Magazin ist zum Beispiel in den Dokumenten EP 1 704 939 A1 oder EP 3 000 544 A1 beschrieben. Die Frequenz, in der die Stangen oder Drähte an das Magazin abgegeben werden, kann dabei eine andere sein, als die mit der die Stagen oder Drähte im Anschluss aus dem Magazin entnommen und in der Gitterschweißmaschine positioniert werden.

Die Übernahmeeinrichtung einer erfindungsgemäßen Transportvorrichtung kann einen ersten Antrieb für das erste Transportband aufweist und die Abgabeeinrichtung kann einen zweiten Antrieb für das zweite Transportband aufweisen, wobei die Antriebe mit unterschiedlichen Geschwindigkeit angetrieben werden können. Der zweite Antrieb kann insbesondere auch diskontinuierlich angetrieben werden.

Das erste Transportband und das zweite Transportband können Bänder oder Riemen mit außenliegenden Zähnen oder Borsten oder Ähnlichem sein, wobei die Stangen oder Drähte zwischen den Zähnen oder den Borsten angeordnet werden können. Die Transportbänder sind vorzugsweise Endlosbänder. Die Stangen oder Drähte können auf einem im Deutschen als Trum bezeichneten Teil eines mit Zähnen oder Borsten versehenen Endlosbandes transportiert werden. Die Stangen oder Drähte können zum Beispiel zwischen die Zähne oder Borsten des Trums eingelegt werden.

Das Endlosband kann über zwei Rollen oder Räder gelegt sein, von denen wenigstens eine Rolle oder ein Rad von dem ersten bzw. dem zweiten Antrieb angetrieben ist.

Die Abgabeeinrichtung kann wenigstens ein Aushebemittel aufweisen, um die Stangen oder Drähte aus einem Bereich des ersten Transportbandes auszuheben. Das wenigstens eine Aushebemittel kann einen Stab oder eine Platte aufweisen, die Zähne oder Borsten oder Ähnliches aufweist. Die Abgabeeinrichtung kann einen dritten Antrieb aufweisen, der mit dem wenigstens einen Aushebemittel gekoppelt ist, und mit dem das wenigstens eine Aushebemittel, insbesondere der Stab oder die Platte bezüglich des ersten und/oder des zweiten Transportbandes abgehoben und abgesenkt werden kann. Das zunächst abgesenkte wenigstens eine Aushebemittel kann unter den auf dem oder den ersten Transportbändern angeordneten Stangen oder Drähten positioniert werden. Anschließend kann das wenigstens eine Aushebemittel angehoben werden. Das Aushebemittel untergreift dann die Stangen oder Drähte und hebt sie dabei von dem oder den ersten Transportbändern ab.

Anstelle des Aushebemittels kann auch das wenigstens eine zweite Transportband der Abgabeeinrichtung unter den auf dem oder den ersten Transportbändern angeordneten Stangen oder Drähten positioniert werden. Durch ein Anheben des wenigstens einen zweiten Transportbandes können dann die Stangen oder Drähte von dem wenigstens ersten Transportband abgehoben werden.

Die Abgabeeinrichtung, das zweite Transportband und/oder ggf. das Aushebemittel können dann bezüglich der Übernahmeeinrichtung nun mittels eines vierten Antriebs einer erfindungsgemäßen Transportvorrichtung verschoben werden. Die Abgabeeinrichtung, das zweite Transportband und/oder ggf. das Aushebemittel kommen dadurch von der Übernahmeeinrichtung und dem oder den ersten Transportbändern frei. Gegebenenfalls kann nun das wenigstens eine Aushebemittel abgesenkt werden, so dass die Stangen oder Drähte auf die unter dem wenigstens einen Aushebemittel angeordneten wenigstens einen zweiten Transportband abgelegt werden können.

Der erste Antrieb und der vierte Antrieb einer erfindungsgemäßen Transportvorrichtung können so zueinander synchronisierbar sein, dass sich das erste Transportband, insbesondere das die Stangen oder Drähte transportierende Trum des wenigstens einen ersten Transportbandes einerseits und die Übernahmeeinrichtung, das zweite Transportband und/oder ggf. das Aushebemittel andererseits mit einer gleichen Geschwindigkeit zueinander bewegen.

Eine erfindungsgemäße Transportvorrichtung kann wenigstens eine Steuerung zum Steuern des ersten, zweiten, dritten und/oder vierten Antriebs aufweisen.

Ferner ist es möglich, dass die Transportvorrichtung einen Lüfter aufweist, um zumindest einen Teil der vereinzelten Stangen oder Drähte in der Transportvorrichtung zu kühlen. Das ist von besonderem Vorteil, da die Stangen oder Drähte bei der Bearbeitung in der ersten Maschine Wärme aufgenommen haben könnten, die während des Transports von der ersten Maschine zur zweiten Maschine abgeführt werden kann.

Besonders vorteilhaft ist es, wenn die Transportvorrichtung
- mehrere mit Abstand zueinander, nebeneinander angeordnete erste Transportbänder aufweist,
- mehrere mit Abstand zueinander, nebeneinander angeordnete zweite Transportbänder aufweist und
- ggf. mehrere mit Abstand zueinander, nebeneinander angeordnete Aushebemittel aufweist,
wobei
- eines oder mehrere der zweiten Transportbänder und ggf. eines oder mehrere der Aushebemittel in einen Zwischenraum zwischen zwei der ersten Transportbänder verschiebbar sind oder
- einer oder mehrere der ersten Transportbänder in einen Zwischenraum zwischen zwei der zweiten Transportbänder oder der Aushebemittel oder zwischen eines der zweiten Transportbänder und einem der Aushebemittel verschiebbar ist.

Dadurch, dass mehrere mit Abstand zueinander, nebeneinander angeordnete erste Transportbänder, zweite Transportbänder und ggf. Aushebemittel vorgesehen sind, könnten für die zu transportierenden Stangen oder Drähte mehrere Auflagepunkte während des Transports geschaffen werden, was einem sicheren Transport der Stangen oder Drähte zuträglich ist.

Die ersten Transportbänder, die zweiten Transportbänder, ggf. das Aushebemittel und/oder die Abgabeeinrichtung können einen gemeinsamen ersten, zweiten, dritten und/oder vierten Antrieb haben. Es können auch mehrere erste, zweite, dritte und/oder vierte Antriebe vorgesehen sein, wobei gleiche Antriebe miteinander synchronisiert sein können.

Ein erfindungsgemäßes Verfahren zum Transportieren von vereinzelten Stangen oder Drähten von einer ersten Maschine zu einer zweiten Maschine mit einer erfindungsgemäßen Transportvorrichtung kann folgende Schritte haben:
- Eingelegen der aus der ersten Maschine kommenden einzelnen Stange oder Drähte in das oder die ersten Transportbänder,
- wenn eine Anzahl Stangen oder Drähte in das oder die ersten Transportbänder eingelegt sind, gleichzeitiges Übernehmen der Anzahl der Stangen oder Drähte in das oder die zweiten Transportbänder,
- wenn die Anzahl der Stangen oder Drähte in das zweite Transportband übernommen wurden, einzelnes Einlegen der übernommenen Stangen oder Drähte in die zweite Maschine.

Zum gleichzeitigen Übernehmen der Anzahl der Stangen oder Drähte in das oder die zweiten Transportbänder kann bzw. können das oder die zweiten Transportbänder und/oder ggf. das oder die Aushebemittel unter die in dem oder den ersten Transportbändern angeordneten Stangen oder Drähten bewegt werden.

Dann kann das oder können die zweiten Transportbänder oder kann das Aushebemittel oder können die Aushebemittel angehoben werden oder das erste Transportband kann oder die ersten Transportbänder können abgesenkt werden, um die Stangen oder Drähte gleichzeitig zu übernehmen.

Nach dem gleichzeitigen Übernehmen der Anzahl der Stangen oder Drähte mittels des Aushebemittels oder der Aushebemittel, kann das Aushebemittel oder können die Aushebemittel und das oder die zweiten Transportbänder relativ zu dem oder den ersten Transportbändern verschoben werden. Sie können sich dann in einer Position befinden, in der die Stangen oder Drähte über dem oder den zweiten Transportbändern sind.

Zum gleichzeitigen Übernehmen der Anzahl der Stangen oder Drähte mittels des oder der zweiten Transportbänder kann das Aushebemittel oder können die Aushebemittel relativ zu dem oder den zweiten Transportbändern abgesenkt werden oder das zweite Transportband kann oder die zweiten Transportbänder können relativ zum Aushebemittel angehoben werden, bis die Anzahl der Stangen oder Drähte auf dem oder den zweiten Transportbändern liegt. Von dem zweiten Transportband oder den zweiten Transportbänder können die Stangen oder Drähte dann nach und nach abgegeben werden.

Die vereinzelten Stangen oder Drähte können nach und nach einzeln an ein Magazin der zweiten Maschine abgeben werden. In diesem Magazin können die Stangen oder Drähte in einem Stapel so angeordnet sein, dass sie einzeln entnommen werden können, zum Beispiel mit einer Vorrichtung, wie sie in der Patentanmeldung EP 3 000 544 A1 beschrieben ist.

Es ist aber auch möglich, dass die Drähte von dem zweiten Transportband der Abgabeeinrichtung nach und nach einzeln in ein Positionierungsmittel transportiert werden, insbesondere geworfen werden oder in einen Schacht des Positionierungsmittels fallen gelassen werden, wobei das Positionierungsmittel die Stangen oder Drähte, das Teil der zweiten Maschine sein kann, unmittelbar in der Weiterverarbeitungsposition positioniert, bevor die Abgabevorrichtung die nächste Stange oder den nächsten Draht abgibt.

Die erste Maschine, die erfindungsgemäße Transportvorrichtung und/oder die zweite Maschine können Schnittstellen für einen Datenaustausch haben, wodurch die durch die Maschinen und die Transportvorrichtung vorgenommen Handlungen auf einander abgestimmt werden können.

Einer Gitterschweißmaschine können zwei erfindungsgemäße Richt- und Abschneidemaschinen zugeordnet sein. Das ist insbesondere dann sinnvoll, wenn von einer Gitterschweißmaschine mehr Längsdrähte in einem Zeitraum zum Anordnen von Längs- und Querdrähten in der Gitterschweißmaschine und zum Schweißen des Gitters benötigt werden, als von einer Richt- und Abschneidemaschine zur Verfügung gestellt werden können. Dann können statt einer Richt- und Abschneidemaschine zwei Richt- und Abschneidemaschinen vorgesehen werden.

Es ist dann möglich, dass diese beiden Maschinen über je eine erfindungsgemäße Transportvorrichtung mit der Gitterschweißmaschine verbunden sind. Die Richt- und Abschneidemaschinen können auf gegenüberliegenden Seiten der Gitterschweißmaschine angeordnet sein. Zwischen jeder Richt- und Abschneidemaschine und der Gitterschweißmaschine ist dann eine erfindungsgemäße Transportvorrichtung angeordnet, die die gerichteten und auf Länge gebrachten Stäbe von den Richt- und Abschneidemaschinen übernehmen und an die Gitterschweißmaschine übergeben.

Es ist aber auch möglich, dass die zwei Richt- und Abschneidemaschinen eine Transportvorrichtung bedienen und die von den beiden Richt- und Abschneidemaschinen hergestellten Stangen in eine Übernahmeeinrichtung eingelegt werden.

Weitere Merkmale und Vorteile der vorliegenden Erfindung werden deutlich anhand der folgenden Beschreibung unter Bezugnahme auf die beiliegenden schematischen Abbildungen. Darin zeigen:
- Fig. 1: eine Draufsicht auf Teile eines ersten Beispiels einer Anordnung aus einer Richt- und Abschneidemaschine, einer ersten Transportvorrichtung und einer Gitterschweißmaschine in schematischer Darstellung,
- Fig. 2: die erste erfindungsgemäße Transportvorrichtung von der Seite in einem ersten Zustand,
- Fig. 3: die gleiche Transportvorrichtung in der gleichen Ansicht in einem zweiten Zustand,
- Fig. 4: die gleiche Transportvorrichtung in der gleichen Ansicht in einem dritten Zustand,
- Fig. 5: die gleiche Transportvorrichtung in der gleichen Ansicht in einem vierten Zustand

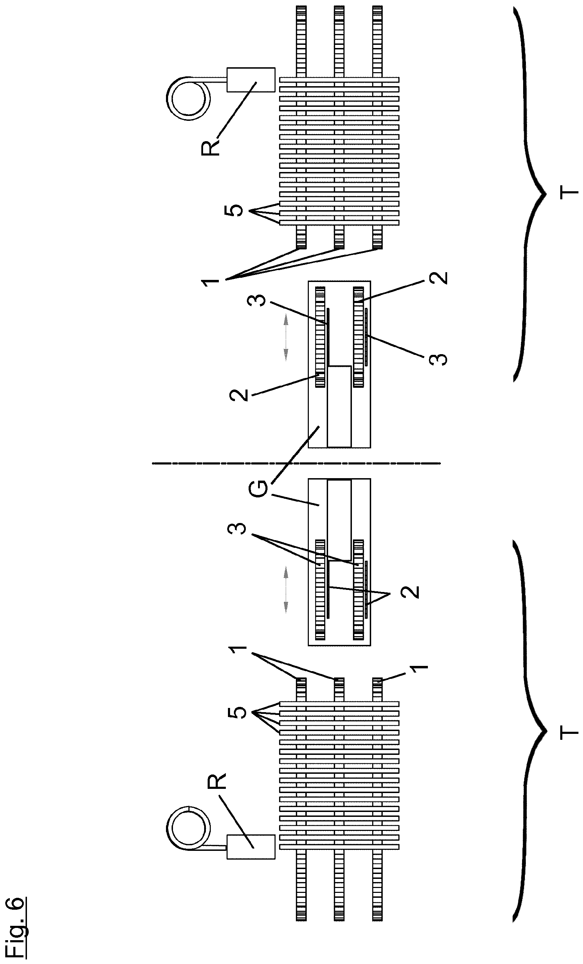

- Fig. 6: eine Draufsicht auf ein zweites Beispiel einer Anordnung in schematischer Darstellung und

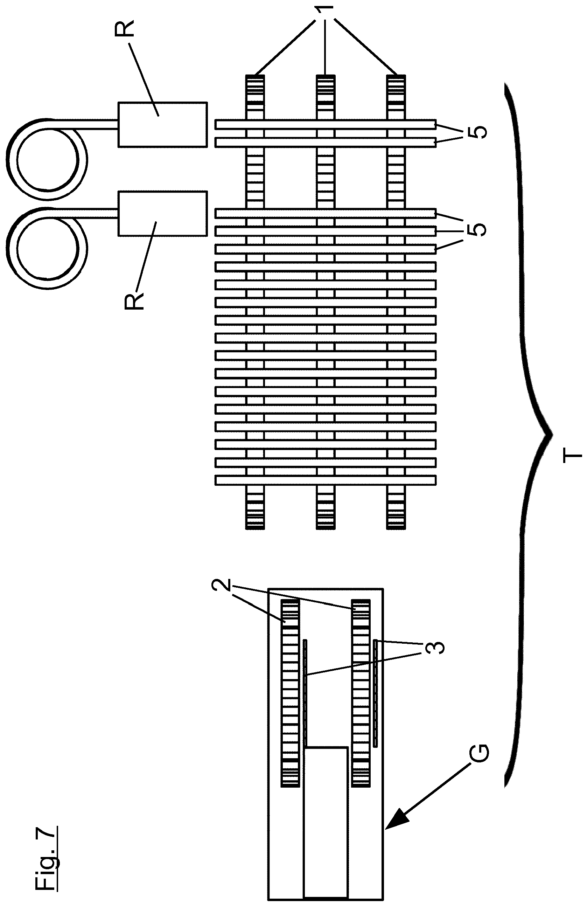

- Fig. 7: eine Draufsicht auf ein drittes Beispiel einer Anordnung in schematischer Darstellung.

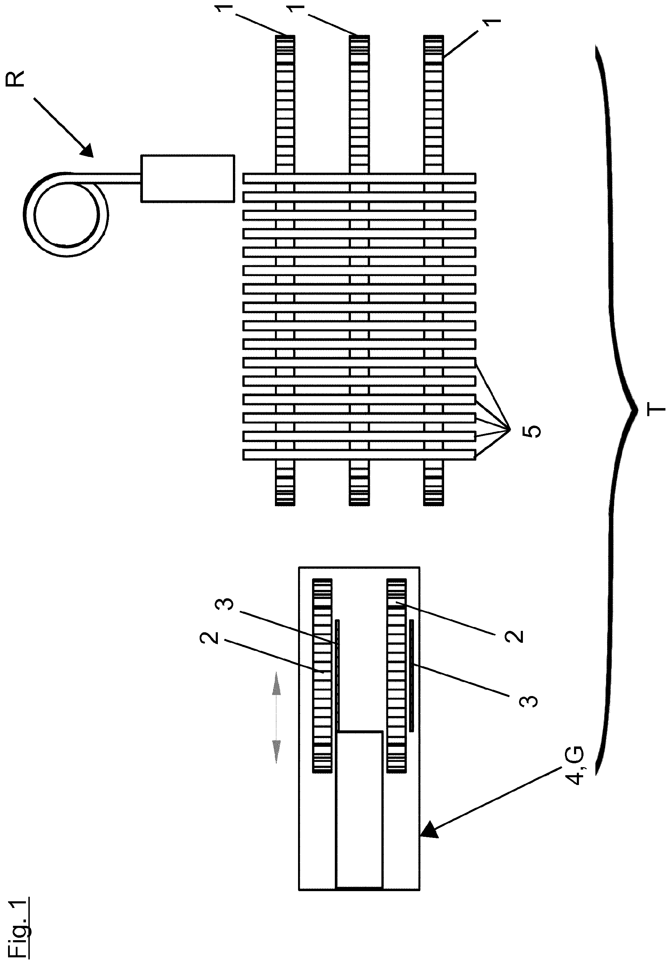

Fig. 1 zeigt eine erste Maschine R, nämlich eine Richt- und Abschneidemaschine. Der Richt- und Abschneidemaschine 9 wird von einer Haspel ein Draht zugeführt. Der Draht wird in der Richt- und Abschneidemaschine gerade gerichtet und anschließend durch Abschneiden auf Länge gebracht, wodurch Stangen 5 hergestellt werden. Aus diesen Stangen 5 wird im weiteren Produktiosprozess in einer Gitterschweißmaschine G ein Drahtgitter geschweißt. Dazu werden die Stangen 5 von der erfindungsgemäßen Transportvorrichtung T einzeln von der Richt- und Abschneidemaschine R übernommen und einzeln an die Gitterschweißmaschine G abgegeben.

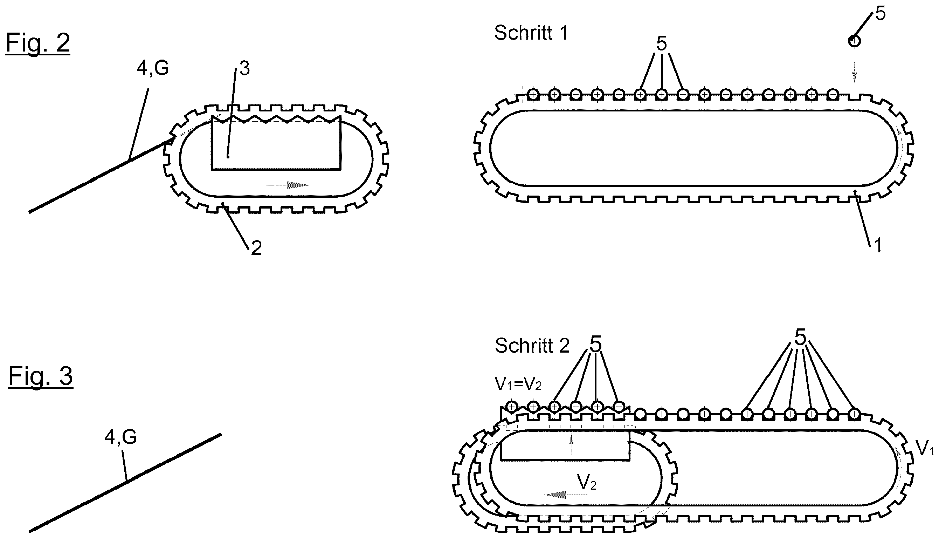

Die Figuren 2 bis 5 zeigen das erste Beispiel der Transportvorrichtung aus der Fig. 1 in vier aufeinander folgenden Zuständen während des Transports von Stangen 5 von der ersten Maschine (in den Figuren 2 bis 5 nicht dargestellt) zu einem Magazin oder Schacht 4 der zweiten Maschine, der in den Figuren 2 bis 5 angedeutet ist.

Zwischen den in den Figuren dargestellten vier Zustände ist nicht die gleiche Zeit vergangen. Die Figuren stellen keine Momentaufnahmen dar, die in einem Takt aufgenommen sind. Die zwischen den vier Zuständen vergangene Zeit ist nicht gleich.

Die erfindungsgemäße Transportvorrichtung weist eine Übernahmeeinrichtung mit wenigstens einem ersten Transportband 1 mit außenliegenden Zähnen und eine Abgabeeinrichtung mit wenigstens einem zweiten Transportband 2 mit außenliegenden Zähnen auf. Die Abgabeeinrichtung weist ferner wenigstens ein optionales Aushebemittel 3 mit einer Platte mit randseitigen Zähnen an einer Seite auf.

Das erste Transportband 1 wird kontinuierlich von einem ersten nicht dargestellten Antrieb mit einer ersten Geschwindigkeit vi bewegt. Die erste Geschwindigkeit vi ist auf einen Takt der ersten Maschine abgestimmt. Auf einem obenliegenden Trum des ersten Transportbandes 1 werden im Takt der ersten Maschine zwischen die Zähne des ersten Transportbandes Stangen 5 abgelegt (Fig.2), bis die Aufnahmekapazität des oberen Trums erschöpft ist (Fig. 3).

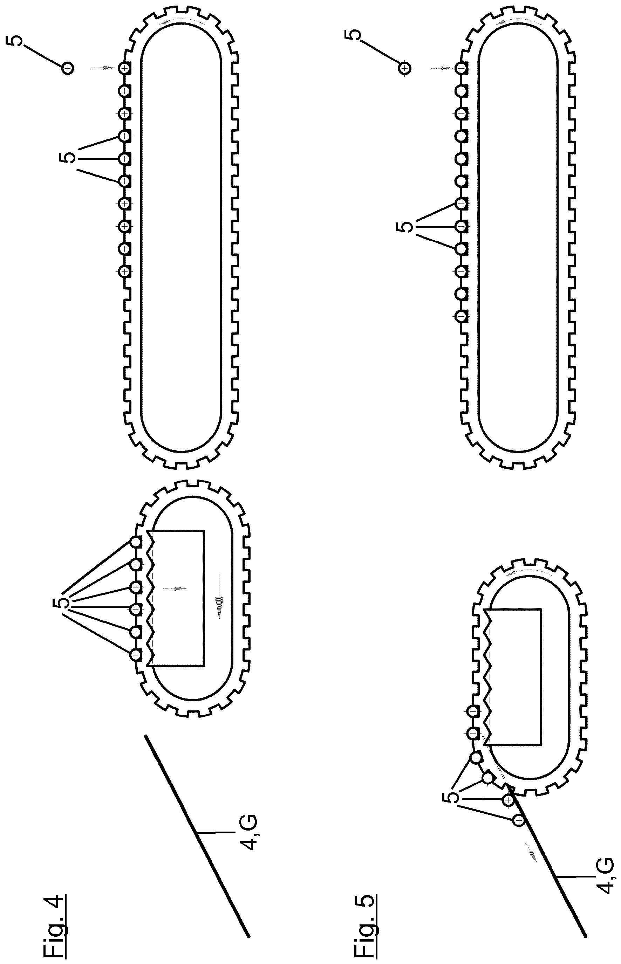

Kurz bevor die Aufnahmekapazität des oberen Trums des ersten Transportbandes 1 erschöpft ist, wird die Abgabeeinrichtung 2, 3 zu der Übernahmeeinrichtung bewegt. Das zweite Transportband 2 und das Aushebemittel 3 sind dabei gegenüber dem oberen Trum des ersten Transportbandes 1 abgesenkt. Das zweite Transportband 2 und das Aushebemittel 3 fährt unter eine Anzahl von Stangen 5 und während die erste Maschine eine Stange 5 auf den letzten freien Platz auf dem oberen Trum des ersten Transportbandes 1 auflegt, wird das Aushebemittel 3 angehoben (Fig. 3) und hebt dabei eine Anzahl von sechs Stangen 5 von dem oberen Trum des ersten Transportbandes 1 ab. Das erste Transportband 1 kann nun weitergedreht werden, ohne das Stangen 5 von dem ersten Transportband fallen (Fig. 4). Es werden im Takt der ersten Maschine weitere Stangen auf das erste Transportband 1 aufgelegt.

Die Abgabeeinrichtung wird in Richtung des Magazins 4 verschoben. Dabei wird, sobald die Abgabeeinrichtung 2, 3 aus dem Bereich der Übernahmeeinrichtung gekommen ist, das Aushebemittel 3 abgesenkt, bis die aus dem ersten Transportband 1 ausgehobenen sechs Stangen auf dem zweiten Transportband 2 aufliegen (Fig. 4).

Das zweite Transportband 2 wird an das Magazin 4 herangefahren und durch eine Bewegung des zweiten Transportbandes 2 werden die Stangen nach und nach einzeln an das Magazin übergeben (Fig. 5). Die Bewegung des zweiten Transportbandes wird von einem nicht dargestellten zweiten Antrieb angetrieben.

Alternativ ist es auch möglich, dass die Stangen 5 nach und nach einzeln an ein Positioniermittel der zweiten Maschine übergeben werden und nicht zur Zwischenlagerung in einem Magazin übergeben werden.

Die Zwischenlagerung kann auch in der Abgabeeinrichtung erfolgen. Dazu könnte das zweite Transportband 2 ein sich an das obere Trum anschließendes vorzugsweise senkrechtes Trum aufweisen, in welches die von dem oberen Trum aufgenommenen Stangen 5 bei einer Bewegung des des zweiten Transportbandes mittels des zweiten Antriebs in das daran anschließende Trum befördert werden, in welchem die Stangen 5 zwischengelagert werden können. Aus diesem Trum können die Stangen dann nach und nach an ein Positioniermittel einer zweiten Maschine abgegeben werden.

Das zweite Beispiel einer Anordnung ist in ähnlicher Weise wie das erste Beispiel gemäß der Fig. 1 schematisch dargestellt. Es zeigt zwei Richt- und Abschneidemaschinen 2, zwei Transportvorrichtungen T und, mit jeweils nur einem Teil angedeutet, eine Gitterschweißmaschine G. Die beiden Richt- und Abschneidemaschinen R und die Transportvorrichtungen T sind symmetrisch zur Gitterschweißmaschine G angeordnet und können die Gitterscheißmaschine G von zwei Seiten mit Stangen 5 versorgen. Die Transportvorrichtungen T sind ebenso wie die Richt- und Abschneidemaschinen R so wie die Transportvorrichtung T und die Richt- und Abschneidemaschine R des ersten Beispiels einer Anordnung nach Fig. 1 gestaltet. Die Gitterschweißmaschine G der zweiten Anordnung hat zwei Magazine, welche die Stangen 5 von der Transportvorrichtung T übernehmen.

Auch die Anordnung nach dem dritten Beispiel hat zwei Richt- und Abschneidevorrichtungen R, aber nur eine Transportvorrichtung T und die Gitterschweißmaschine G weist nur ein Magazin auf, an das die Transportvorrichtung die Stangen 5 übergibt. Die Transportvorrichtung hat verlängerte erste Transportbänder, so dass es möglich ist, die beiden Richt- und Abschneidemaschinen R nebeneinander anzuordnen und die von den Richt- und Abschneidemaschinen R abgegebenen Stangen 5 in die ersten Transportbänder 1 einzulegen.

Die Steuerung der Anordnung ist so eingerichtet, dass nacheinander Blöcke von im Beispiel zehn durch Zähne voneinander getrennte Aufnahmen von den Richt- und Abschneidemaschinen mit Stangen bestückt werden. Dabei wird eine erste Hälfte eines Blocks von Aufnahmen von einer ersten der beiden Richt- und Abschneidemaschinen R bestückt, während die zweite Hälfte von der zweiten der beiden Richt- und Abschneidemaschinen R bestückt wird. Ist ein Block vollständig bestück, werden die ersten Transportbänder so weit transportiert, dass der nächste Block von im Beispiel zehn Aufnahmen bestückt werden kann.

Die Weitergabe der Stangen an die Abgabeeinrichtung 2, 3 erfolgt auf die bereits beschriebene Art ebenso wie die Abgabe an die Gitterschweißmaschine.

## Patentansprüche

1. Transportvorrichtung für Stangen (5) oder Drähte
- mit einer Übernahmeeinrichtung zum Übernehmen der Stangen (5) oder Drähte aus einer ersten Maschine, insbesondere eine Richt- und Abschneidemaschine und
- mit einer Abgabeeinrichtung zum Abgeben der Stangen (5) oder Drähte an eine zweite Maschine, insbesondere eine Gitterschweißmaschine
**dadurch gekennzeichnet, dass**
die Übernahmeeinrichtung wenigstens ein erstes Transportband (1) zum Transportieren vereinzelter Stangen oder Drähte aufweist und die Abgabeeinrichtung wenigstens ein zweites Transportband (2) zum Transportieren vereinzelter Stangen oder Drähte aufweist.

2. Transportvorrichtung nach Anspruch 1, **dadurch gekennzeichnet, dass** die Übernahmeeinrichtung einen ersten Antrieb für das erste Transportband (1) aufweist und die Abgabeeinrichtung einen zweiten Antrieb für das zweite Transportband (2) aufweist, wobei die Antriebe mit unterschiedlichen Geschwindigkeit antreibbar sind

3. Transportvorrichtung nach Anspruch 1 oder 3, **dadurch gekennzeichnet, dass** das erste Transportband (1) und das zweite Transportband (2) Bänder oder Riemen mit außenliegenden Zähnen oder Borsten oder Ähnlichem sind, wobei die Stangen oder Drähte zwischen den Zähnen oder den Borsten aufnehmbar sind.

4. Transportvorrichtung nach einem der Ansprüche 1 bis 3, **dadurch gekennzeichnet, dass** die Abgabeeinrichtung ein Aushebemittel (3) aufweist, um die Stangen oder Drähte aus einem Bereich des ersten Transportbandes (1) auszuheben.

5. Transportvorrichtung nach Anspruch 4, **dadurch gekennzeichnet, dass** die Abgabeeinrichtung einen dritten Antrieb aufweist, der mit dem Aushebemittel (3) gekoppelt ist, und mit dem das Aushebemittel bezüglich des ersten und/oder des zweiten Transportbandes anhebbar und absenkbar ist.

6. Transportvorrichtung nach Anspruch 4 oder 5, **dadurch gekennzeichnet, dass** das Aushebemittel (3) Zähne oder Borsten oder Ähnliches aufweist.

7. Transportvorrichtung nach einem der Ansprüche 1 bis 6, **dadurch gekennzeichnet, dass** die Transportvorrichtung einen vierten Antrieb aufweist, mit welche die Abgabeeinrichtung, das zweite Transportband (2) und/oder ggf. das Aushebemittel (3) bezüglich der Übernahmeeinrichtung verschiebbar ist.

8. Transportvorrichtung nach einem der Ansprüche 2 bis 7, **dadurch gekennzeichnet, dass** der erste Antrieb und der vierte Antrieb so zueinander synchronisierbar sind, dass sich das erste Transportband (1) einerseits und die Übernahmeeinrichtung, das zweite Transportband (2) und/oder ggf. das Aushebemittel (3) andererseits mit einer gleichen Geschwindigkeit zueinander bewegen.

9. Transportvorrichtung nach einem der Ansprüche 1 bis 8, **dadurch gekennzeichnet, dass** die Transportvorrichtung eine Steuerung zum Steuern des ersten, zweiten, dritten und/oder vierten Antriebs aufweist.

10. Transportvorrichtung nach einem der Ansprüche 1 bis 9, **dadurch gekennzeichnet, dass** die Transportvorrichtung einen Lüfter aufweist, um zumindest einen Teil der vereinzelten Stangen (5) oder Drähte in der Transportvorrichtung zu kühlen.

11. Transportvorrichtung nach einem der Ansprüche 1 bis 10, **dadurch gekennzeichnet, dass** die Transportvorrichtung
- mehrere mit Abstand zueinander, nebeneinander angeordnete erste Transportbänder (1) aufweist,
- mehrere mit Abstand zueinander, nebeneinander angeordnete zweite Transportbänder (2) aufweist und
- ggf. mehrere mit Abstand zueinander, nebeneinander angeordnete Aushebemittel (3) aufweist,
wobei eines oder mehrere der zweiten Transportbänder (2) und ggf. eines oder mehrere der Aushebemittel (3) in einen Zwischenraum zwischen zwei der ersten Transportbänder (1) verschiebbar sind oder einer oder mehrere der ersten Transportbänder (1) in einen Zwischenraum zwischen zwei der zweiten Transportbänder (2) oder der Aushebemittel (3) oder zwischen eines der zweiten Transportbänder (2) und einem der Aushebemittel (3) verschiebbar ist.

12. Verfahren zum Transportieren von vereinzelten Stangen (5) oder Drähten von einer ersten Maschine zu einer zweiten Maschine mit einer Transportvorrichtung nach einem der Ansprüche 1 bis 11, **gekennzeichnet dadurch, dass**
- nacheinander einzelne Stange (5) oder Drähte aus der ersten Maschine kommend in das oder die ersten Transportbänder (1) eingelegt werden,
- wenn eine Anzahl vereinzelter Stangen (5) oder Drähte in das oder die ersten Transportbänder (1) eingelegt sind, die Anzahl der vereinzelten Stangen (5) oder Drähte gleichzeitig in das oder die zweiten Transportbänder (2) übernommen werden,
- wenn die Anzahl der vereinzelten Stangen (5) oder Drähte in das zweite Transportband (2) übernommen wurden, die übernommenen vereinzelten Stangen (5) oder Drähte einzeln in die zweite Maschine eingelegt werden.

13. Verfahren nach Anspruch 12, **dadurch gekennzeichnet, dass** zum gleichzeitigen Übernehmen der Anzahl der vereinzelten Stangen (5) oder Drähte gleichzeitig in das oder die zweiten Transportbänder (2) das oder die zweiten Transportbänder (2) und/oder ggf. das oder die Aushebemittel (3) unter die in dem oder den ersten Transportbändern (1) angeordneten vereinzelten Stangen (5) oder Drähten bewegt wird und dann das oder die zweiten Transportbänder (2) oder das Aushebemittel (3) angehoben wird bzw. werden oder das oder die ersten Transportbänder (1) abgesenkt wird bzw. werden, um die vereinzelten Stangen (5) oder Drähte gleichzeitig zu übernehmen.

14. Verfahren nach Anspruch 13, **dadurch gekennzeichnet, dass** das nach dem gleichzeitigen Übernehmen der Anzahl der vereinzelten Stangen (5) oder Drähte mittels des Aushebemittels (3), das Aushebemittel (3) oder das Aushebemittel (3) und das oder die zweiten Transportbänder (2) relativ zu dem oder den ersten Transportbändern (1) verschoben wird bzw. werden und dann in einer Position sind, in der die vereinzelten Stangen (5) oder Drähte über dem oder den zweiten Transportbändern (2) sind,

15. Verfahren nach Anspruch 13, **dadurch gekennzeichnet, dass** zum gleichzeitigen Übernehmen der Anzahl der vereinzelten Stangen (5) oder Drähte mittels des oder der zweiten Transportbänder (2) das Aushebemittel (3) relativ zu dem oder den zweiten Transportbändern (2) abgesenkt oder das oder die zweiten Transportbänder (2) relativ zum Aushebemittel (3) angehoben wird bzw. werden, bis die Anzahl der vereinzelten Stangen (5) oder Drähte auf dem oder den zweiten Transportbändern (2) liegt.
